(19) Europäisches Patentamt
European Patent Office
Office européen des brevets

(11) EP 3 026 148 B1

(12) # EUROPEAN PATENT SPECIFICATION

(45) Date of publication and mention of the grant of the patent:
**13.02.2019 Bulletin 2019/07**

(51) Int Cl.:
***D01F 6/80*** *(2006.01)* ***B60C 9/00*** *(2006.01)*
***D02G 3/48*** *(2006.01)* ***B60C 9/20*** *(2006.01)*

(21) Application number: **14195183.0**

(22) Date of filing: **27.11.2014**

(54) **CORD COMPRISING A FULLY AROMATIC POLYAMIDE FIBER**

STRANG MIT EINER VOLLAROMATISCHEN POLYAMIDFASER

CORDE COMPRENANT UNE FIBRE DE POLYAMIDE ENTIÈREMENT AROMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.06.2016 Bulletin 2016/22**

(73) Proprietor: **TEIJIN LIMITED**
**Osaka-shi**
**Osaka (JP)**

(72) Inventor: **Komiya, Naoya**
**Osaka, 541-0054 (JP)**

(74) Representative: **CPW GmbH**
**Kasinostraße 19-21**
**42103 Wuppertal (DE)**

(56) References cited:
**EP-A2- 2 065 225**
**JP-A- 2002 096 611**
**JP-A- 2012 207 325**
**US-A- 3 869 429**
**US-A- 4 075 172**
**US-A- 5 849 121**
**US-A1- 2014 120 791**

- **BARRON E R: "Hybrid Tire Cords Containing Kevlar Aramid", KAUTSCHUK UND GUMMI - KUNSTSTOFFE, HUTHIG VERLAG, HEIDELBERG, DE, vol. 40, no. 2, 1 January 1987 (1987-01-01), pages 130-135, XP002232349, ISSN: 0948-3276**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 026 148 B1

## Description

The present invention relates to cords for the reinforcement of rubber, thermoplastic and thermoset material products, more specifically to a cord comprising a fully aromatic polyamide. The invention also relates to the use of these cords in tires, hoses and conveyor belts and to a tire comprising the cord of the invention.

Cords are widely used for the reinforcement of rubber, thermoset and thermoplastic material products, especially rubber products.

For this purpose, yarns made from different fibers may be employed, including e.g. polyamide (Nylons), polyesters and aramids.

The different fibers have different mechanical properties and modify the properties of the material to be reinforced in different ways.

Aramids (aromatic polyamides) are advantageous because they have high strength. When cords are employed in the reinforcement of rubber, thermoplastic or thermoset material products, a high elongation at break in combination with high strength may also be desired, especially for tire cords.

Known para-aramid fibers, e.g. based on p-phenylene terephthalamide (PPTA, e.g. Twaron®) usually have a low elongation at break.

The tire industry requires cords with high elongation at break and high strength. Usually, the elongation at break in cords is influenced by the elongation at break of the starting yarns, but it can be increased by increasing the twist factor. However, higher twist factors lead to lower strength and increase costs. Therefore, a tire cord is usually a compromise between strength, elongation at break, cost and performance in the application.

JP2012-207325 describes a fully aromatic polyamide fiber which fiber has a high elongation at break.

However, it is not known which cord construction of such yarn results in the combination of high strength and high elongation at break for the cord. Preferably, such cord also has a high toughness and when treated with an adhesive shows good adhesion with the rubber, thermoplastic or thermoset material, low fatigue and low hysteresis.

These tasks are solved by a cord comprising a fully aromatic polyamide fiber which fiber comprises a copolymer formed by the polycondensation of structural units with structural formula I and structural units with structural formula II, characterized in that the cord comprises at least two yarns comprising the fully aromatic polyamide fiber with each yarn having a linear density of at least 50 dtex and the cord has a twist factor of at least 5, wherein
formula I is

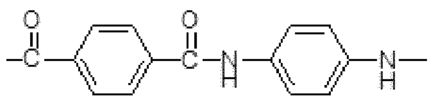

I

and formula II is

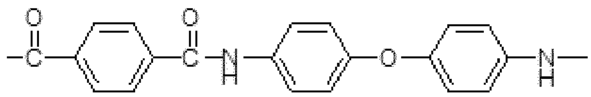

II

The cords comprise fully aromatic polyamide fiber comprising structural units with the structural formula I and II. Fibers comprising these structural units have been described in JP2012-207325. The fiber comprises a copolymer formed by the polycondensation including the structural units presented by formula I and formula II. The structural unit of formula II comprises 4,4'-diaminodiphenylether (4,4'-DAPE) and a terephthaloyl moiety, while the structural unit of formula I comprises para-phenylene diamine (PPD) and a terephthaloyl moiety. The synthesis of the fibers comprising structural units with structural formula I and II has been described in JP2012-207325, which reference is hereby incorporated with regard to the description of the synthesis of the fiber.

In one embodiment the fiber comprises co-poly-(paraphenylene/4,4'-oxydiphenylene terephthalamide).

The cords of the invention comprise yarn which yarn is formed from fibers. At least some of the fibers comprise fully aromatic polyamide. The cord and the fully aromatic polyamide may differ in its composition, as described in the following. The fiber comprised in the cord of the invention further comprises 30-60 mole% of the structural unit with the structural formula II (based on the total of the structural units of structural formula I and II), preferably 35-55 mole%, more preferably 45-55 mole%.

The fiber of the cord additionally comprises a structural unit with structural formula III

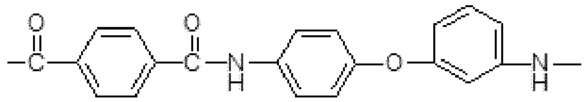 III

Hence the cord of the invention comprises fully aromatic polyamide fiber which fiber comprises structural units with the structural formula I, II and III. Preferably, fiber of the cord consists of structural units with the structural formula I, II and III. Specifically, the fiber comprises 10-20 mole% of the structural units of structural formula III, based on the total amount of structural units with the structural formula I, II and III. If the cord of the invention comprises fiber which comprises structural units of structural formula I, II and III, the cord is not limited to any specific construction. Therefore, one yarn of any linear density and any twist factor could be used.

For example the fiber may comprise 50 mole% of structural units with the structural formula I, 35 mole% of structural units with the structural formula II and 15 mole% of structural units with the structural formula III, based on the total amount of structural units with structural formula I, II and III.

In one embodiment the cord consists of yarns comprising the fully aromatic polyamide fiber with structural units I, II and III as specified above.

In one embodiment the cord consists of yarns consisting of the fully aromatic polyamide fiber with structural units I, II and III as specified above.

In another embodiment the cord comprises yarns of the fully aromatic polyamide fiber used in the invention and yarns made of other type fully aromatic polyamide fibers, preferably para-type fully aromatic polyamide fibers as e.g. PPTA (para-phenylene terephthalamide). Optionally, in the cord yarns of fully aromatic polyamide fiber as described above may also be combined with yarns comprising fibers made of other polymers, e.g. but not limited to Nylon, rayon, polyethylene terephthalate (PET), polyethylenenaphtalate (PEN) and polyolefineketone (POK).

The cord according to the invention comprises at least two yarns with a linear density of at least 50 dtex. Preferably, the yarns are multifilament yarns. The linear density of the yarns may be higher. In general a maximum linear density of 100.000 dtex may be mentioned. The linear density of the yarns is chosen according to the use of the cord. For tire cords, a linear density of 50-8000 dtex is suitable, preferably 150-3500 dtex. For hoses or umbilicals yarns with a linear density of 1100 - 6700 dtex are suited.

Yarn as used in present invention is a continuous strand or bundle comprising multiple filaments. Yarn may be obtained by methods known to the skilled person, including but not limited to directly producing yarn by spinning, or producing yarn by assembly of more than one bundle of filaments.

The yarns may be in the form of spun stretch-broken or spunnized yarn. The cords made from the yarns may be used as such or after being processed on suitable equipment e.g. by knitting, braiding or in form of a fabric.

Although one single thread or yarn can be used, the typical number of yarns combined in the cord is at least two. More yarns may also be combined in one cord. For example, up to 8 yarns may be combined in one cord.

The cord of the invention has a twist factor of at least 5. The twist factor of the cords is defined according to BISFA "Terminology of man-made fibers", 2009 edition, such that:

$$TF = t^* \sqrt{\frac{LD}{1000}}$$

where TF = Twist Factor, t = Twist in turns per meter and LD = Linear density in tex.

The twist factor may be as high as 1000, independent of the linear density of the yarns used to build the cord.

Preferably, the twist factor is 25-500, more preferably 50-500.

For example, for a tire cord a twist factor of 50-300 may be used.

The yarns used to build the cord may be twisted. The yarns may have 0-3000 tpm (turns per meter), where lower linear density yarns typically have higher twist. When producing the cord, the yarns may be plied by removing the twist of each yarn such that the yarn present in the cord has a lower or no twist per meter when compared to the starting material. The necessary equipment and methods of making twisted yarns and cords from fibrous materials are well known in the art. For example, the twisted yarns or cords of the present invention may be produced on ring-twist equipment, direct cabler or two-for-one twisting equipment. Twisting of cords can for example be done in multiple stages even on different type of machines or in a single step. Cords can be symmetric, asymmetric, balanced or unbalanced and may be produced with or without overfeed of at least one of the yarns.

The cord of the present invention is suited for use in the reinforcement of various materials, particularly rubber or thermoset or thermoplastic products, including cords used for the reinforcement of for example tires, hoses, belts (e.g. conveyor belts) and umbilicals. The invention also pertains to the use of the cord of the invention for these applications.

In particular, the invention pertains to a tire comprising a cord as described in this specification. Tires include

but are not limited to automotive tires, airplane tires and truck tires.

For the various applications the cord may be treated with an adhesive composition to improve the adhesion between the cord and the rubber, thermoset or thermoplastic material in which the cord may be embedded as reinforcement.

For example, the cord may be dipped at least once in a resorcinol-formaldehyde-latex (RFL) adhesive.

Resorcinol-formaldehyde-free adhesive may also be used as e.g. described in EP0235988B1 and US5565507.

The yarn may be treated with additional compositions to improve adhesion, e.g. epoxy or isocyanate based adhesives. A standard dipping procedure for aramid yarns is to pretreat the yarn with an epoxy based composition, after which RFL is applied in a second step.

The content of the adhesive based on the weight of cord is preferably in the range of 0-20wt%, more preferably 0-10wt%.

The invention is further explained and the advantages are shown in the following nonlimiting illustrative examples.

Methods

Determination of elongation at break (EAB), breaking tenacity (BT), breaking toughness (BTo) of yarns and cords

The mechanical properties of the yarns and cords were determined according to standard ASTM D7269/D7269M - 10 Standard Test Methods for Tensile Testing of Aramid Yarns 1. For dipped cords, for the determination of the breaking tenacity (BT) the linear density of the cords was corrected for the solids pick up due to the treatment with the adhesive.

The breaking toughness is defined as the surface area below the tensile curve, as defined in ASTM D885.

The linear density of yarns and cords was determined according to ASTM D1907.

Twist factor

The twist factor of the cords is defined according to BISFA "Terminology of man-made fibers", 2009 edition, such that:

$$TF = t^{*}\sqrt{\frac{LD}{1000}}$$

where : TF = Twist Factor, t = Twist in turns per meter and LD = Linear density in tex.

Twist efficiency

The twist efficiency is determined based on the breaking tenacities (BT) of the original yarn from which the twisted yarn or cord is made:

Twist efficiency (%, tenacity based) TE-T = Breaking Tenacity of the twisted yarn or cord / original breaking tenacity of the original yarn.

The twist efficiency indicates how much of the original yarn strength is retained in the cord construction.

Twist-dip efficiency (%, tenacity based) TDE-T= Breaking Tenacity of the dipped twisted yarn or cord / original breaking tenacity of the original yarn.

The twist-dip efficiency indicates how much of the original yarn strength is retained in the dipped twisted cord construction.

Example 1

A cord according to the invention was prepared from two yarns of each 167 dtex of the fully aromatic polyamide fiber made from 50 mole% terephtaloyl dichloride (TDC) and 50 mole% diamine structural units which diamine structural units consist of 50 mole% PPD, 15 mole% 3,4'DAPE (3,4' diaminodiphenylether) and 35 mole% 4,4'DAPE (4,4' diaminodiphenylether), based on the amount of the diamine structural units. (This yarn and cord is referred to as "sample") The mechanical properties of the yarns used for assembling the cord are shown in table 1.

For preparing the cord, each yarn of 167dtex was given Z600 turns of twist per meter on a Lezzeni ring twist equipment. The two resulting twisted yarns with both Z600 single twist were in a next step assembled and given S600

twist per meter on a Lezzeni ring twist equipment resulting in a 334 dtex cord with a twist factor (Tf) of 66.

As a control sample a cord was prepared in the same way from a fiber comprising 50 mole% 3,4'DAPE and 50 mole% PPD as diamine structural units.

(This yarn and cord is referred to as "control")

The mechanical properties of both cords were determined and are shown in table 1.

Table 1: Properties of yarns and 2x167 dtex cords, x1Z600 x2S600 Tf=66

| property | sample yarn | sample cord (acc. to invention) | control yarn | control cord | Difference between yarn | Difference between cords |
|---|---|---|---|---|---|---|
| EAB (%) | 5.66 | 6.35 | 4.04 | 4.36 | +40% | +46% |
| BT (mN/tex) | 2200 | 2050 | 2330 | 1990 | -5% | +3% |
| BTo (J/g) | 56.3 | 56.7 | 46 | 40.6 | +39% | +40% |
| TE-T (%) | | 93 | | 85.8 | | +9% |

The data of table 1 show that the cords according to the invention perform better than cords prepared from prior art yarns. As known to the person skilled in the art combining yarns into a cord decreases the breaking tenacity (BT) of the cord. However, in the cords of the invention the decrease of the BT in comparison to the BT of the yarn is much less than in the control sample. In fact, the absolute BT of the sample cord surpasses the reference, while the starting sample yarn has lower BT. At the same time, the cords of the invention show a more pronounced increase of the elongation at break resulting in a cord which retains a high BT in combination with a high EAB.

For all determined properties the cord according to the invention shows a better performance than the control cord.

<u>Example 2</u>

A cord according to the invention ("sample") and a control cord were prepared with the same chemical composition as described for example 1, however yarns of higher linear density were used.

The cords were prepared from 2 yarns of each 1670 dtex, which yarns were assembled from 10 yarns of 167 dtex each.

For preparing the cord, each yarn of 1670dtex was given in a first step Z410 turns of twist per meter on a Lezzeni ring twist equipment. The two resulting twisted yarns with both Z410 single twist were in a next step assembled and given S410 twist per meter on a Lezzeni ring twist equipment resulting in a 3340 dtex cord with a twist factor of 200.

The mechanical properties of the yarns used for assembling the cord and of the cords are shown in table 2.

Table 2: Properties of yarns and 2x1670 dtex cords, Tf=200, x1Z410 x2S410

| property | sample yarn | Sample cord (acc. to invention) | control yarn | control cord | Difference Between yarns | Difference between cords |
|---|---|---|---|---|---|---|
| EAB (%) | 5.85 | 8.55 | 4.05 | 6.39 | +44% | +34% |
| BT (mN/tex) | 2085 | 1198 | 2220 | 1125 | -6% | +6% |
| BTo (J/g) | 55 | 39 | 44 | 27 | +25% | +46% |
| TE-T (%) | | 57.5 | | 50.7 | | +13% |

Compared to reference yarns (control), an EAB gain of more than 40% is realized. It has been found that this EAB gain is not lost during twist operations. Surprisingly, an improvement in twist efficiency has been found, indicating that less strength loss occurs during twisting compared to the reference yarns.

<u>Example 3</u>

The cords of example 2 were treated on a 2-bath, 3-oven Litzler single end Computreater. The first bath had the following composition (parts by weight):

| | |
|---|---|
| Water | 978.2 |
| Aerosol OT75% | 1.3 (from Cytec Industries) |
| GE-100 epoxide | 20.0 (from Raschig) |

After submerging in the first bath, the cord was oven dried for 120s at 150°C at a load of 8.5N. Subsequently, the cord was oven cured for 90s at 240°C at a load of 8.5N.

Then the cord passed a second bath containing RFL with the following composition (parts by weight):

| | |
|---|---|
| Ammoniumhydroxyde 25% | 10.3 |
| Penacolite R50 50% | 55.6 |
| Pliocord VP106 latex 40% | 407.0 |
| Formaldehyde 37% | 18.5 |
| Demin water | 508.6 |

After submerging in the RFL bath, the cord was oven dried for 90s at 230°C at a load of 8.5N.

The mechanical properties of the yarns used for assembling the dipped cord and of the dipped cords are shown in table 3.

Table 3: mechanical properties of dipped cords

| property | Sample yarn (acc. to invention, untreated) | Sample dipped cord (acc. to invention) | control yarn | control dipped cord | Difference Between yarns | Difference between dipped cords |
|---|---|---|---|---|---|---|
| EAB (%) | 5.85 | 8.08 | 4.05 | 5.57 | +44% | +45 |
| BT (mN/tex) | 2085 | 1210 | 2220 | 1160 | -6% | +4% |
| BTo (J/g) | 55 | 42.2 | 44 | 29.1 | +25% | +45 |
| TDE-T (%) | | 61.7 | | 55.9 | | +10 |

For all determined properties the dipped cord according to the invention shows a better performance than the control dipped cord. Surprisingly, an improvement in twist efficiency and twist-dip efficiency has been found, meaning that less strength loss occurs during twisting compared to the reference yarns.

## Claims

1. Cord comprising fully aromatic polyamide fiber which fiber comprises a copolymer formed by the polycondensation of structural units with structural formula I and structural units with structural formula II wherein the cord comprises at least two yarns comprising the para type fully aromatic polyamide fiber with each yarn having a linear density of at least 50 dtex and the cord has a twist factor of at least 5, wherein formula I is

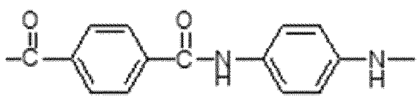

I

and formula II is

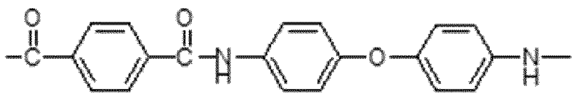

II

,

wherein the fiber comprises 30-60 mole% of structural units of structural formula II based on the total amount of structural units of structural formula I and II and wherein the fiber additionally comprises a structural unit with structural formula III, wherein formula III is

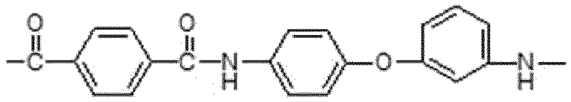 III

and wherein the fiber comprises 10-20 mole% of the structural unit with the structural formula III based on the total amount of structural units with structural formula I, II and III.

**2.** Cord according to claim 1 wherein the fiber comprises 35-55 mole% of structural units of structural formula II based on the total amount of structural units of structural formula I and II.

**3.** Cord according to any one of the preceding claims wherein the fiber consists of the fully aromatic polyamide.

**4.** Cord according to any one of the preceding claims wherein the cord consists of the fully aromatic polyamide fiber.

**5.** Cord according to any one of the preceding claims which has an elongation at break of at least 4%, preferably at least 6%, more preferably at least 8%.

**6.** Use of a cord according to any one of the preceding claims for reinforcement of rubber, thermoplastic or thermoset material products, preferably for the reinforcement of tires, hoses, umbilicals and conveyor belts.

**7.** Tire comprising a cord according to any one of claims 1 to 5.

**Patentansprüche**

**1.** Strang, umfassend eine vollaromatische Polyamidfaser, welche Faser ein Copolymer umfasst, das durch die Polykondensation von Struktureinheiten mit Strukturformel I und Struktureinheiten mit Strukturformel II gebildet ist, wobei der Strang zumindest zwei Garne umfasst, umfassend die vollaromatische Polyamidfaser vom Paratyp, wobei jedes Garn eine Lineardichte von zumindest 50 dtex aufweist und der Strang einen Drehungsbeiwert von zumindest 5 hat, wobei Formel I

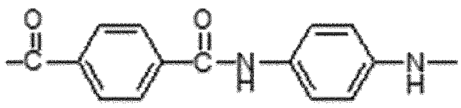 I

ist und Formel II

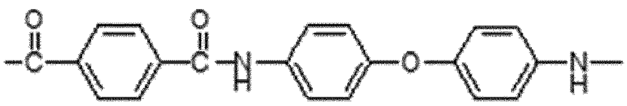 II

ist, wobei die Faser 30-60 Mol-% von Struktureinheiten von Strukturformel II umfasst, basierend auf der Gesamtmenge von Struktureinheiten von Strukturformel I und II, und wobei die Faser zusätzlich eine Struktureinheit mit Strukturformel III umfasst, wobei Formel III

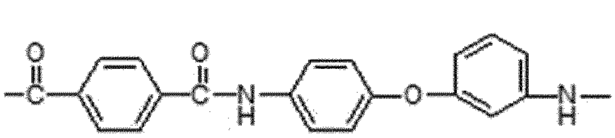 III

ist, und wobei die Faser 10-20 Mol-% von der Struktureinheit mit der Strukturformel III umfasst, basierend auf der

Gesamtmenge von Struktureinheiten mit Strukturformel I, II und III.

2. Strang nach Anspruch 1, wobei die Faser 35-55 Mol-% von Struktureinheiten von Strukturformel II umfasst, basierend auf der Gesamtmenge von Struktureinheiten von Strukturformel I und II.

3. Strang nach einem der vorstehenden Ansprüche, wobei die Faser aus dem vollaromatischen Polyamid besteht.

4. Strang nach einem der vorstehenden Ansprüche, wobei der Strang aus der vollaromatischen Polyamidfaser besteht.

5. Strang nach einem der vorstehenden Ansprüche, der eine Bruchdehnung von zumindest 4 %, vorzugsweise zumindest 6 %, bevorzugter zumindest 8 % hat.

6. Verwendung eines Strangs nach einem der vorstehenden Ansprüche zur Verstärkung von Gummi, Thermoplast oder Produkten aus Duroplastmaterial, vorzugsweise für die Verstärkung von Reifen, Schläuchen, Versorgungsschläuchen und Förderbändern.

7. Reifen, umfassend einen Strang nach einem der Ansprüche 1 bis 5.

## Revendications

1. Corde comprenant une fibre de polyamide entièrement aromatique, laquelle fibre comprend un copolymère formé par la polycondensation d'unités structurales de formule structurale I et d'unités structurales de formule structurale II dans laquelle la corde comprend au moins deux fils comprenant la fibre de polyamide entièrement aromatique de type para avec chaque fil ayant une densité linéaire d'au moins 50 dtex et la corde a un facteur de torsion d'au moins 5, dans laquelle la formule I est

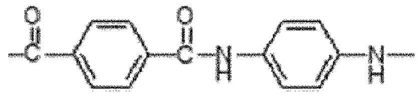 I

et la formule II est

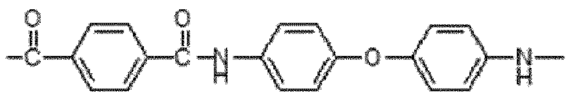 II ,

dans laquelle la fibre comprend de 30 à 60 % en moles d'unités structurales de formule structurale II sur la base de la quantité totale d'unités structurales de formule structurale I et II et dans laquelle la fibre comprend en outre une unité structurale de formule structurale III, dans laquelle la formule III est

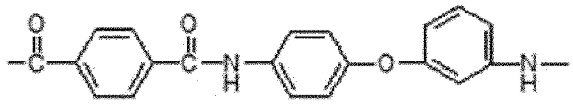 III

et dans laquelle la fibre comprend de 10 à 20 % en moles de l'unité structurale de formule structurale III sur la base de la quantité totale d'unités structurales de formule structurale I, II et III.

2. Corde selon la revendication 1 dans laquelle la fibre comprend de 35 à 55 % en moles d'unités structurales de formule structurale II sur la base de la quantité totale d'unités structurales de formule structurale I et II.

3. Corde selon l'une quelconque des revendications précédentes dans laquelle la fibre est constituée du polyamide entièrement aromatique.

4. Corde selon l'une quelconque des revendications précédentes dans laquelle la corde est constituée de la fibre de

polyamide entièrement aromatique.

5. Corde selon l'une quelconque des revendications précédentes qui a un allongement à la rupture d'au moins 4 %, de préférence d'au moins 6 %, de manière davantage préférée d'au moins 8 %.

6. Utilisation d'une corde selon l'une quelconque des revendications précédentes pour le renforcement du caoutchouc, de produits en matériau thermoplastique ou thermodurcissable, de préférence pour le renforcement de pneus, de tuyaux flexibles, de liaisons ombilicales et de courroies de transport.

7. Pneu comprenant une corde selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012207325 A
- EP 0235988 B1
- US 5565507 A


### Non-patent literature cited in the description


- Terminology of man-made fibers. 2009
- Terminology of man-made fibers. BISFA, 2009